# EUROPÄISCHE PATENTSCHRIFT

(11) **EP 3 541 673 B1**
(45) Veröffentlichungstag und Bekanntmachung des Hinweises auf die Patenterteilung: **02.03.2022**
(21) Anmeldenummer: 17783802.6
(22) Anmeldetag: 05.10.2017
(51) Int. Cl.: B60T 8/40

(54) **PEDALWEGSIMULATOR,HYDRAULIKBLOCK MIT EINEM DERARTIGEN PEDALWEGSIMULATOR UND VERFAHREN ZUR EINSTELLUNG EINER KENNLINIE EINES DERARTIGEN PEDALWEGSIMULATORS**
PEDAL TRAVEL SIMULATOR, HYDRAULIC BLOCK COMPRISING A PEDAL TRAVEL SIMULATOR OF SAID TYPE, AND METHOD FOR ADJUSTING A CHARACTERISTIC OF A PEDAL TRAVEL SIMULATOR OF SAID TYPE
SIMULATEUR DE COURSE DE PÉDALE, BLOC HYDRAULIQUE ÉQUIPÉ DE CE DERNIER ET PROCÉDÉ DE RÉGLAGE D'UNE COURBE CARACTÉRISTIQUE D'UN SIMULATEUR DE COURSE DE PÉDALE DE CE TYPE

(30) Priorität: 16.11.2016 DE 102016222567
(43) Veröffentlichungstag der Anmeldung: 25.09.2019
(73) Patentinhaber: Robert Bosch GmbH, 70442 Stuttgart (DE)
(72) Erfinder: GUGGENMOS, Harald, 87509 Immenstadt/Seifen (DE); MAYR, Matthias, 87549 Rettenberg (DE); WEH, Andreas, 87477 Sulzberg (DE); SPROCQ, Raynald, 77450 Esbly (FR); ANDERSON, Chris, 75002 Paris (FR)
(86) Internationale Anmeldenummer: PCT/EP2017/075283
(87) Internationale Veröffentlichungsnummer: WO 2018/091195

(56) Entgegenhaltungen:
- DE-A1-102014 213 732
- DE-A1-102014 215 308
- JP-A- 2008 284 941
- JP-A- 2009 143 302
- JP-A- 2014 031 067

## Beschreibung

Die Erfindung betrifft einen Pedalwegsimulator mit den Merkmalen des Oberbegriffs des Anspruchs 1.

### Stand der Technik

Pedalwegsimulatoren ermöglichen in fremdkraftbetätigten hydraulischen Fahrzeugbremsanlagen einen Pedalweg (bei einer Handbremse einen Hebelweg) bei einer Betätigung eines Hauptbremszylinders. Der Hauptbremszylinder dient bei einer Fremdkraftbetätigung als Sollwertgeber für einen hydraulischen Bremsdruck, der nicht mit dem Hauptbremszylinder sondern mit Fremdenergie beispielsweise mit einer Hydropumpe erzeugt wird. Der Hauptbremszylinder ist bzw. wird bei einer Fremdkraftbremsung beispielsweise durch Schließen eines Ventils hydraulisch von der Fahrzeugbremsanlage getrennt und verdrängt bei seiner Betätigung Bremsflüssigkeit in den Pedalwegsimulator.

Ein Pedalwegsimulator weist üblicherweise einen Zylinder und einen in dem Zylinder verschieblichen Kolben sowie eine Kolbenfeder auf, die den Kolben entgegen einer Verschieberichtung beaufschlagt. Der Pedalwegsimulator ist oder wird bei einer Fremdkraftbetätigung einer Fahrzeugbremsanlage hydraulisch mit einem Hauptbremszylinder verbunden, der bei seiner Betätigung Bremsflüssigkeit in den Zylinder des Pedalwegsimulators verdrängt, wodurch der Kolben gegen eine Federkraft der Kolbenfeder im Zylinder verschoben wird.

Die Patentanmeldung JP 2009-143 302 A offenbart eine hydraulische Fremdkraft-Fahrzeugbremsanlage mit einer Kolben-Zylinder-Einheit, die als Pedalwegsimulator an einen muskelkraftbetätigbaren Hauptbremszylinder angeschlossen ist. Eine Schraubendruckfeder als Kolbenfeder beaufschlagt den Kolben entgegen seiner Verschiebung durch Betätigung des Hauptbremszylinders. Ein im Zylinder umlaufender Wulst bildet eine Hubbegrenzung, die einen Hub, das heißt die Verschiebung des Kolbens im Zylinder begrenzt.

Die Offenlegungsschrift DE 10 2014 215 308 A1 offenbart einen Pedalwegsimulator mit einem Zylinder, der mit einem napfförmigen Zylinderdeckel verschlossen ist, der axial ein kurzes Stück in den Zylinder greift. Der Zylinderdeckel weist einen kleineren Innendurchmesser als der Zylinder auf, wodurch er eine Hubbegrenzung für einen in dem Zylinder verschieblichen Kolben bildet. Der Pedalwegsimulator weist eine Schraubendruckfeder und ein schlauchförmiges, koaxial innerhalb der Schraubendruckfeder angeordnetes elastisches Element als Kolbenfedern auf. Das elastische Element ist axial kurz und wird erst nach einem Teil einer Verschiebung des Kolbens wirksam. Auf der Stirnseite der Kolbenfedern weist der Kolben eine Ringstufe und einen axial kurzen Fortsatz auf. Die Schraubendruckfeder stützt sich an der Ringstufe und das elastische Element an einer Stirnfläche des Fortsatzes ab.

### Offenbarung der Erfindung

Der erfindungsgemäße Pedalwegsimulator mit den Merkmalen des Anspruchs 1 weist eine Lochscheibe als Hubbegrenzung für seinen Kolben auf, die einen Hub des Kolbens, d. h. eine Verschiebung des Kolbens im Zylinder, begrenzt. Der Kolben weist eine umlaufende Ringstufe als Anschlag auf, die durch Anlage an der Lochscheibe den Hub des Kolbens begrenzt. Auf einer Seite seiner Ringstufe weist der Kolben einen Fortsatz auf, der die Lochscheibe (13) bereits in einer Ausgangsstellung bei drucklosem Pedalwegsimulator durchgreift und an dem die Kolbenfeder angreift.

Die Hubbegrenzung verhindert, dass die Kolbenfeder "auf Block" geht. "Auf Block gehen" meint eine bauartbedingte maximale Auslenkung der Kolbenfeder beispielsweise durch aneinander Anlegen von Windungen einer Schraubendruckfeder oder ein flächiges aneinander Anlegen von Tellerfedern.

Die Unteransprüche haben vorteilhafte Ausgestaltungen und Weiterbildungen der im Anspruch 1 angegebenen Erfindung zum Gegenstand.

Vorzugsweise hält die Lochscheibe Tellerfedern als Kolbenfeder in einem Zylinderdeckel des Pedalwegsimulators und/oder trägt eine Last eines mit Kraft gegen sie drückenden Kolbens über ein Gewinde des Zylinderdeckels in einen Zylinder des Pedalwegsimulators ab (Ansprüche 2 bis 4).

Vorzugsweise ist der Pedalwegsimulator in einen Hydraulikblock einer Schlupfregelung einer hydraulischen Fahrzeugbremsanlage, insbesondere einer Fremdkraft-Fahrzeugbremsanlage integriert (Ansprüche 6 bis 8). Solche Hydraulikblöcke sind an sich bekannt, sie sind üblicherweise quaderförmigen Metallblöcke, die entsprechend einem hydraulischen Schaltplan der Fahrzeugbremsanlage bzw. der Schlupfregelung einer Fahrzeugbremsanlage verbohrt sind. Die Hydraulikblöcke sind mit Magnetventilen, Hydropumpen und weiteren hydraulischen Bauelementen der Schlupfregelung bestückt. Solche Hydraulikblöcke sind an sich bekannt und werden hier nicht weiter erläutert.

Gemäß dem Verfahren des Anspruchs 8 wird der Kolben plastisch gestaucht, d. h. plastisch in der Verschieberichtung verkürzt auf eine Länge, die von einer Länge des Zylinders, einer Höhe eines eventuellen Zylinderdeckels und/oder von einer Lage der Lochscheibe im Zylinder bzw. im Zylinderdeckel abhängig ist. Dadruch wird eine Kennlinie des Pedalwegsimulators eingestellt. Die Kennlinie ist ein von einem aufgenommenen Bremsflüssigkeitsvolumen abhängiger hydraulischer Druck. Die Kennlinie wird individuell eingestellt, d. h. abhängig vom jeweiligen Zylinder, Zylinderdeckel, Lochscheibe, Kolbenfeder und Kolben. Toleranzen werden dadurch minimiert.

### Kurze Beschreibung der Zeichnung

Die Erfindung wird nachfolgend anhand einer in der Zeichnung dargestellten Ausführungsform näher erläutert. Es zeigen:
- Figur 1: einen Längsschnitt eines Hydraulikblocks einer Schlupfregelung einer hydraulischen Fremdkraft-Fahrzeugbremsanlage mit einem Pedalwegsimulator gemäß der Erfindung; und
- Figuren 2 und 3: einen Teilschnitt des Hydraulikblocks aus Figur 1 im Bereich des Pedalwegsimulators bei betätigter Fahrzeugbremsanlage.

### Ausführungsform der Erfindung

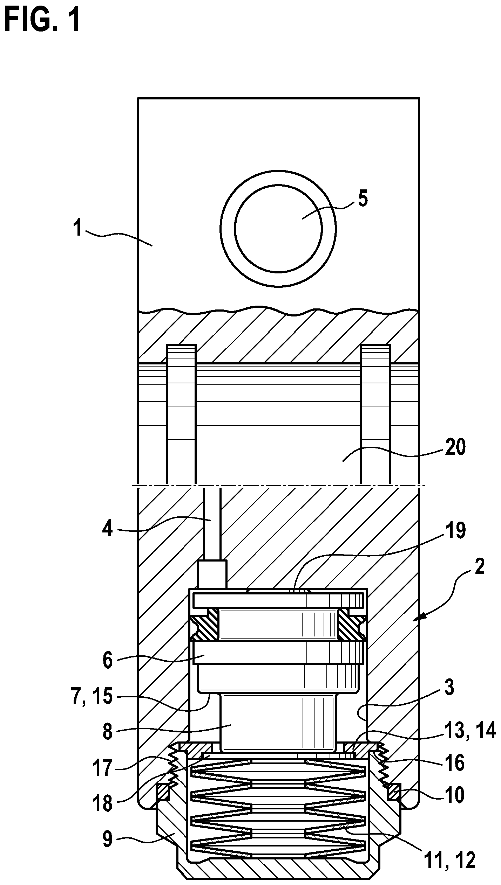

Der in Figur 1 dargestellte, erfindungsgemäße Hydraulikblock 1 ist für eine Schlupfregelung und eine Fremdkraftbetätigung einer im Übrigen nicht dargestellten, hydraulischen Fremdkraft-Fahrzeugbremsanlage vorgesehen. Der Hydraulikblock 1 ist ein quaderförmiger Metallblock, der mit Ausnahme eines zu erläuternden Pedalwegsimulators 2 unbestückt gezeichnet ist. Der Hydraulikblock 1 weist eine in der Zeichnung nicht sichtbare Verbohrung entsprechend eines hydraulischen Schaltplans der Fahrzeugbremsanlage auf. Er wird mit nicht gezeichneten hydraulischen Bauelementen für die Fremdkraftbetätigung und der Schlupfregelung wie Magnetventilen, einem Hauptbremszylinder mit einem oder mehreren Kolben, einem Fremdkraftzylinder mit einem Kolben und dem Pedalwegsimulator 2 bestückt, die durch die Verbohrung hydraulisch entsprechend dem hydraulischen Schaltplan der Fahrzeugbremsanlage verschaltet sind. Weil ein Hauptbremszylinder in den Hydraulikblock 1 integriert, ist müssen über Bremsleitungen nur hydraulische Radbremsen an den Hydraulikblock 1 angeschlossen werden. Solche Hydraulikblöcke 1 sind bekannt und werden hier nicht weiter erläutert.

Der Hydraulikblock 1 weist ein zylindrisches Sackloch als Zylinder 3 des Pedalwegsimulators 2 auf, an dessen Grund eine Bohrung 4 mündet, die den Pedalwegsimulator 2 hydraulisch mit einer Hauptbremszylinderbohrung 5 verbindet. Im Zylinder 3 ist ein Kolben 6 axial verschieblich aufgenommen, der mit einer Ringstufe 7 in einen durchmesserkleineren Fortsatz 8 übergeht.

In eine Mündung des Zylinders 3 des Pedalwegsimulators 2 ist ein zylinderrohrförmiger und an einem Ende geschlossener Zylinderdeckel 9 geschraubt und mit einem Dichtring 10 abgedichtet. In dem Zylinderdeckel 9 sind Tellerfedern 11 als Kolbenfeder 12 aufgenommen. Die Tellerfedern 11 sind als Stapel im Zylinderdeckel 9 angeordnet und abwechselnd entgegengesetzt orientiert. Die Tellerfedern 11 stützen sich im Zylinderdeckel 9 ab und drücken den Kolben 6 des Pedalwegsimulators 2 an seinem Fortsatz 8 gegen den Grund des Zylinders 3.

An einer offenen Seite des Zylinderdeckels 9 ist eine Lochscheibe 13 angeordnet, die im Ausführungsbeispiel in die offene Seite des Zylinderdeckels 9 eingepresst und dadurch am Zylinderdeckel 9 befestigt ist. Die Lochscheibe 13 hält die Tellerfedern 11 im Zylinderdeckel 9, bis der Zylinderdeckel 9 in die Mündung des Zylinders 3 geschraubt wird. Der Zylinderdeckel 9 bildet mit der Lochscheibe 13 und den Tellerfedern 11 eine vormontierbare Baugruppe. Die Lochscheibe 13 kann auch in anderer Weise, beispielsweise durch Bördeln, am Zylinderdeckel 9 befestigt sein.

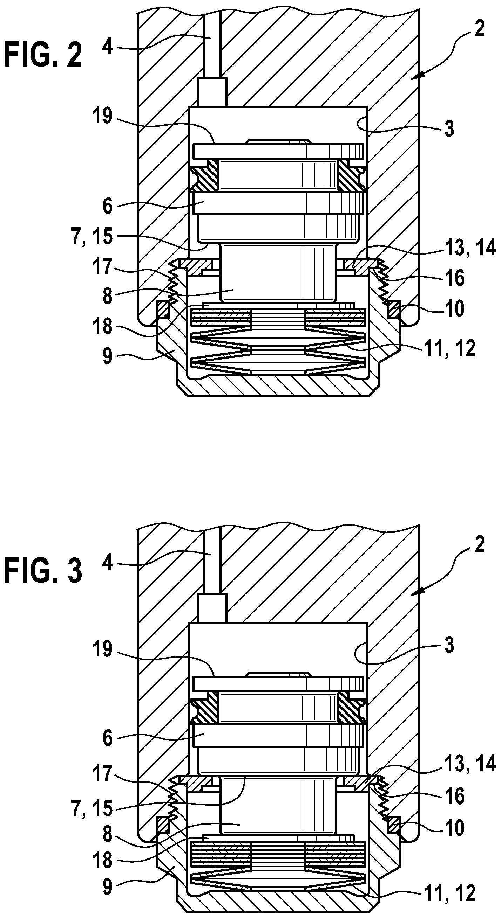

Der Fortsatz 8 des Kolbens 6 durchgreift die Lochscheibe 13 und stößt bei einem maximalen Kolbenhub mit seiner Ringstufe 7 gegen die Lochscheibe 13 an der offenen Seite des Zylinderdeckels 9 bzw. in der Mündung des Zylinders 3 (Figur 3; Figur 2 zeigt eine Zwischenstellung des Kolbens 6 zwischen einer in Figur 1 gezeigten Ausgangsstellung bei drucklosem Pedalwegsimulator 1 und dem maximalen Kolbenhub). Die Lochscheibe 13 bildet eine Hubbegrenzung 14 für den Kolben 6 und die Ringstufe 7 des Kolbens 6 einen Anschlag 15, der mit der Hubbegrenzung 14 zusammenwirkt und einen Hub des Kolbens 6 begrenzt. Gegen eine Druckbeaufschlagung des Kolbens 6 stützt sich die die Hubbegrenzung 14 bildende Lochscheibe 13 mit einer Ringstufe 16 axial an der offenen Seite des Zylinderdeckels 9 ab. Eine von dem Kolben 6 über seine Ringstufe 7 auf die die Hubbegrenzung 14 bildende Lochscheibe 13 ausgeübte Axialkraft bei einer Druckbeaufschlagung des Kolbens 6 wird durch Formschluss von der Lochscheibe 13 auf den Zylinderdeckel 9 und über ein Gewinde 17, mit dem der Zylinderdeckel 9 in ein Gegengewinde in der Mündung des Zylinders 3 geschraubt ist, in den Zylinder 3 eingeleitet.

Die die Hubbegrenzung 14 bildende Lochscheibe 13 verhindert ein "auf Block gehen" der die Kolbenfeder 12 bildenden Tellerfedern 11. Mit "auf Block gehen" ist gemeint, dass die Tellerfedern 12 eben zusammengedrückt werden und im wesentlichen vollflächig aneinander anliegen. Das vermeidet die als Hubbegrenzung 14 an der offenen Seite des Zylinderdeckels 9 angeordnete Lochscheibe 13. Eine axiale Länge des Zylinderdeckels 9 ist so auf die Tellerfedern 11 abgestimmt, dass sie nicht "auf Block gehen". Für mehr oder weniger viele Tellerfedern 11 lassen sich unterschiedlich lange Zylinderdeckel 9 verwenden. Dadurch ist eine Anpassung des Pedalwegsimulators 2 an unterschiedliche Hauptbremszylinder möglich.

Der Zylinderdeckel 9 führt die die Kolbenfedern 12 bildenden Tellerfedern 11 außen an ihren Außenrändern radial und so, dass sie zum Federn axial verformbar sind. Der Zylinderdeckel 9 ist aus einem verschleißfesten Werkstoff, insbesondere aus Stahl hergestellt, wogegen der Hydraulikblock 1 aus einem weniger verschleißfesten Werkstoff, beispielsweise aus Aluminium oder einer Aluminiumlegierung hergestellt sein kann.

Zwischen den Tellerfedern 11 und dem Kolben 6 ist eine Scheibe als Verschleißschutzelement 18 angeordnet. Die Scheibe besteht aus einem verschleißfesten Werkstoff, insbesondere aus Stahl. Sie verhindert einen unmittelbaren Kontakt der Tellerfedern 11 mit dem Kolben 6, der aus einem weniger verschleißfesten Werkstoff, beispielsweise aus Aluminium oder einer Aluminiumlegierung hergestellt sein kann. Das Verschleißschutzelement 18 verhindert ein Kratzen oder Schaben der Tellerfedern 11 am Kolben 6.

Zu einer Einstellung einer Kennlinie des Pedalwegsimulators 2 wird der Kolben 6 plastisch gestaucht, das heißt durch plastische Verformung auf eine Solllänge verkürzt. Die Kennlinie ist eine von einem hydraulischen Druck im Zylinder 3 des Pedalwegsimulators 2 abhängige Aufnahme von Bremsflüssigkeit im Zylinder 3, die unter anderem von einer Federhärte bzw. einer Federkennlinie der Kolbenfeder 12 abhängig ist. Der hydraulische Druck im Zylinder 3 ist proportional zu einer von der Kolbenfeder 12 auf den Kolben 6 ausgeübten Federkraft und ein vom Zylinder 3 aufgenommenes Bremsflüssigkeitvolumen ist proportional einer Verschiebung des Kolbens 6 im Zylinder 3. Die Kennlinie des Pedalwegsimulators 2 bestimmt eine Kraft/Weg-Abhängigkeit bei einer Betätgigung des Hauptbremszylinders und damit eine Pedalcharakteristik einer den Pedalwegsimulator 1 aufweisenden Fremdkraft-Fahrzeugbremsanlage bei einer Fremdkraftbetätigung.

Zum plastischen Stauchen weist der Kolben 6 eine niedrige Erhebung 19 an einem Ende auf, auf die sich die plastische Verkürzung des Kolbens 6 im wesentlichen beschränkt. Die Länge des Kolbens 6 bestimmt eine Vorspannung der die Kolbenfeder 12 bildenden Tellerfedern 11 oder auch einen Leerweg ("jump-in) des Kolbens 6 am Beginn seiner Verschiebung, bis er die Tellerfedern 11 elastisch verformt. Es werden vor dem Einschrauben des Zylinderdeckels 9 in die Mündung des Zylinders 3 eine Tiefe des Zylinders 3, eine Länge des Zylinderdeckels 9 und des Tellerfederpakets gemessen und der Kolben 6 auf das entsprechende Maß gestaucht. Es können stattdessen auch andere charakteristische Maße des Pedalwegsimulators 2 gemessen werden. Es wird individuell gemessen, das heißt es werden die Bauteile gemessen, die anschließend zu dem Pedalwegsimulator 2 zusammengebaut werden. Dadurch wird die Kennlinie des Pedalwegsimulators 2 individuell für jeden Pedalwegsimulator 2 eingestellt und Herstellungstoleranzen minimiert.

Der Hydraulikblock 1 weist wie bereits gesagt eine Hauptbremszylinderbohrung 5 auf, die in der Ausführungsform durchmessergestuft ist und umlaufende Nuten aufweist. In die Hauptbremszylinderbohrung 5 wird ein nicht gezeichneter Hauptbremszylinder eingepresst, in den ein oder mehrere, nicht gezeichnete Kolben eingebracht werden, von denen zu einer Betätigung des Hauptbremszylinders bzw. der Fahrzeugbremsanlage einer mit einem nicht gezeichneten Bremspedal verschiebbar und der oder die anderen Kolben durch Druckbeaufschlagung verschiebbar sind.

Zur Fremdkraftbetätigung weist der Hydraulikblock 1 eine Fremdkraftzylinderbohrung 20 auf, die sich in einer anderen Schnittebene wie der Pedalwegsimulator 2 befindet und von der deswegen in den Figuren nur ein Halbschnitt sichtbar ist. Der Schnitt ist in den Figuren so versetzt, dass der Pedalwegsimulator 2 im Achsschnitt und die Fremdkraftzylinderbohrung 20 als Halbschnitt zu sehen sind. In die Fremdkraftzylinderbohrung 20 wird ein nicht gezeichneter Fremdkraftzylinder eingepresst, in dem ein Kolben verschiebbar aufgenommen ist. Zu einer Fremdkraftbetätigung der Fahrzeugbremsanlage wird der Kolben mit einem nicht gezeichneten Elektromotor über ein Untersetzungsgetriebe und einen Gewindetrieb im Fremdkraftzylinder verschoben. Der Elektromotor wird an dem Hydraulikblock 1 angeschraubt. Bei einer Fremdkraftbetätigung dient der Hauptbremszylinder wie gesagt als Sollwertgeber, ein Bremsdruck wird durch Regelung eines Verschiebewegs des Kolbens im Fremdkraftzylinder und/oder mit Magnetventilen geregelt.

## Patentansprüche

1. Pedalwegsimulator für eine hydraulische Fremdkraft-Fahrzeugbremsanlage, mit einem in einem Zylinder (3) verschieblichen Kolben (6) und mit einer Kolbenfeder (12), die den Kolben (6) entgegen einer Verschiebung beaufschlagt, wobei der Pedalwegsimulator (2) eine Lochscheibe (13) als Hubbegrenzung (14) für den Kolben (6) aufweist, **dadurch gekennzeichnet, dass** der Kolben (6) eine umlaufende Ringstufe (7) als Anschlag (15) aufweist, die durch Anlage an der Lochscheibe (13) einen Hub des Kolbens (6) begrenzt, und dass der Kolben (6) einen Fortsatz (8) auf einer Seite seiner Ringstufe (7) aufweist, der die Lochscheibe (13) bereits in einer Ausgangsstellung bei drucklosem Pedalwegsimulator (2) durchgreift und an dem die Kolbenfeder (12) angreift.

2. Pedalwegsimulator nach Anspruch 1, **dadurch gekennzeichnet, dass** der Zylinder (3) des Pedalwegsimulators (2) einen hohlen Zylinderdeckel (9) aufweist, in dem die Kolbenfeder (12) aufgenommen ist, an/in dem die den Anschlag (15) für den Kolben (6) bildende Lochscheibe (13) angeordnet ist und der ein Gewinde (17) aufweist, mit dem er mit einem Gegengewinde des Zylinders (3) verschraubt ist.

3. Pedalwegsimulator nach Anspruch 2, **dadurch gekennzeichnet, dass** die Lochscheibe (13) die Kolbenfeder (12) im Zylinderdeckel (9) hält und/oder dass sich die Lochscheibe (13) axial am Zylinderdeckel (9) gegen den Kolben (6) abstützt, wenn der Kolben (6) an der Lochscheibe (13) anliegt.

4. Pedalwegsimulator nach Anspruch 2, **dadurch gekennzeichnet, dass** der Pedalwegsimulator (2) einen Satz Tellerfedern (11) als Kolbenfeder (12) aufweist, die in dem Zylinderdeckel (9) radial geführt sind.

5. Pedalwegsimulator nach Anspruch 1, **dadurch gekennzeichnet, dass** zwischen dem Kolben (6) und der Kolbenfeder (12) ein Verschleißschutzelement (18) angeordnet ist.

6. Hydraulikblock für eine hydraulischen Fremdkraft-Fahrzeugbremsanlage mit einem Pedalwegsimulator (2) nach Anspruch 1, **dadurch gekennzeichnet, dass** der Zylinder (3) des Pedalwegsimulators (2) als Loch im Hydraulikblock (1) ausgebildet ist.

7. Hydraulikblock nach Anspruch 6, **dadurch gekennzeichnet, dass** der Hydraulikblock (1) eine Hauptbremszylinderbohrung (5) und/oder eine Fremdkraftzylinderbohrung (20) aufweist.

8. Verfahren zur Einstellung einer Kennlinie eines Pedalwegsimulators (2) nach Anspruch 1, **dadurch gekennzeichnet, dass** der Kolben (6) durch plastisches Stauchen individuell an den Zylinder (3) und/oder einen Zylinderdeckel (9) angepaßt wird.

## Claims

1. Pedal travel simulator for a hydraulic external-force vehicle brake system, having a piston (6) which is displaceable in a cylinder (3) and having a piston spring (12) which acts on the piston (6) counter to a displacement, wherein the pedal travel simulator (2) has a perforated disc (13) as stroke limiter (14) for the piston (6), **characterized in that** the piston (6) has a peripheral annular step (7) as stop (15) which, by bearing against the perforated disc (13), limits a stroke of the piston (6), and **in that** the piston (6) has an extension (8) on one side of its annular step (7) that already engages through the perforated disc (13) in a starting position with pressureless pedal travel simulator (2) and on which the piston spring (12) acts.

2. Pedal travel simulator according to Claim 1, **characterized in that** the cylinder (3) of the pedal travel simulator (2) has a hollow cylinder cover (9) in which the piston spring (12) is received and on/in which the perforated disc (13) forming the stop (15) for the piston (6) is arranged, and which has a thread (17) with which it is screwed to a mating thread of the cylinder (3) .

3. Pedal travel simulator according to Claim 2, **characterized in that** the perforated disc (13) holds the piston spring (12) in the cylinder cover (9) and/or **in that** the perforated disc (13) is supported axially on the cylinder cover (9) against the piston (6) when the piston (6) bears against the perforated disc (13).

4. Pedal travel simulator according to Claim 2, **characterized in that** the pedal travel simulator (2) has a set of disc springs (11) as piston spring (12) which are radially guided in the cylinder cover (9).

5. Pedal travel simulator according to Claim 1, **characterized in that** a wear protection element (18) is arranged between the piston (6) and the piston spring (12) .

6. Hydraulic block for a hydraulic external-force vehicle brake system having a pedal travel simulator (2) according to Claim 1, **characterized in that** the cylinder (3) of the pedal travel simulator (2) is formed as a hole in the hydraulic block (1).

7. Hydraulic block according to Claim 6, **characterized in that** the hydraulic block (1) has a master brake cylinder bore (5) and/or an external-force cylinder bore (20) .

8. Method for setting a characteristic of a pedal travel simulator (2) according to Claim 1, **characterized in that** the piston (6) is individually adapted to the cylinder (3) and/or to a cylinder cover (9) by plastic upsetting.

## Revendications

1. Simulateur de course de pédale pour un système de freinage de véhicule hydraulique actionné par une force extérieure, comprenant un piston (6) mobile dans un cylindre (3) et un ressort de piston (12) qui sollicite le piston (6) contre un déplacement, le simulateur de course de pédale (2) présentant un disque perforé (13) comme limiteur de course (14) pour le piston (6),
**caractérisé en ce que** le piston (6) présente un étage annulaire périphérique (7) en tant que butée (15) qui limite une course du piston (6) par appui sur le disque perforé (13), et **en ce que** le piston (6) présente un prolongement (8) sur un côté de son étage annulaire (7) qui traverse le disque perforé (13) déjà dans une position de départ lorsque le simulateur de course de pédale (2) est sans pression et auquel attaque le ressort de piston (12).

2. Simulateur de course de pédale selon la revendication 1, **caractérisé en ce que** le cylindre (3) du simulateur de course de pédale (2) présente un couvercle de cylindre creux (9) dans lequel est reçu le ressort de piston (12), sur/dans lequel est disposé le disque perforé (13) formant la butée (15) pour le piston (6) et qui présente un filetage (17) par lequel il est vissé avec un contre-filetage du cylindre (3).

3. Simulateur de course de pédale selon la revendication 2, **caractérisé en ce que** le disque perforé (13) maintient le ressort de piston (12) dans le couvercle de cylindre (9), et/ou **en ce que** le disque perforé (13) prend appui axialement sur le couvercle de cylindre (9) sur le piston (6) lorsque le piston (6) est en appui sur le disque perforé (13).

4. Simulateur de course de pédale selon la revendication 2, **caractérisé en ce que** le simulateur de course de pédale (2) présente un ensemble de rondelles Belleville (11) en tant que ressort de piston (12) qui est guidé radialement dans le couvercle de cylindre (9) .

5. Simulateur de course de pédale selon la revendication 1, **caractérisé en ce qu'**un élément anti-usure (18) est disposé entre le piston (6) et le ressort de piston (12).

6. Bloc hydraulique pour un système de freinage de véhicule hydraulique actionné par une force extérieure, comprenant un simulateur de course de pédale (2) selon la revendication 1, **caractérisé en ce que** le cylindre (3) du simulateur de course de pédale (2) est réalisé sous la forme d'un trou dans le bloc hydraulique (1).

7. Bloc hydraulique selon la revendication 6, **caractérisé en ce que** le bloc hydraulique (1) présente un alésage de maître-cylindre de frein (5) et/ou un alésage de cylindre actionné par une force extérieure (20) .

8. Procédé de réglage d'une courbe caractéristique d'un simulateur de course de pédale (2) selon la revendication 1, **caractérisé en ce que** le piston (6) est adapté par refoulement plastique individuellement au cylindre (3) et/ou à un couvercle de cylindre (9).
